# EUROPÄISCHE PATENTANMELDUNG

(11) **EP 4 542 039 A1**
(43) Veröffentlichungstag der Anmeldung: **23.04.2025**
(21) Anmeldenummer: 23204880.1
(22) Anmeldetag: 20.10.2023
(51) Int. Cl.: F04B 49/035, F04B 49/06, F04D 27/02

(54) **VERFAHREN ZUR STEUERUNG EINES KOMPRESSORSYSTEMS**

(71) Anmelder: Burckhardt Compression AG, 8404 Winterthur (CH)
(72) Erfinder: VOSER, Alexandre, 8352 Elsau (CH)
(74) Vertreter: Hepp Wenger Ryffel AG

(57) **Zusammenfassung**

Verfahren zur Ermittlung wenigstens einer Soll-Stellung mindestens eines Saugventil-Abhebegreifers und/oder mindestens eines Bypass-Ventils eines Kompressorsystems umfassend mindestens einen Kompressor. Verfahren zur Steuerung eines Kompressorsystems umfassend mindestens einen Kompressor. Computerimplementierte Verfahren zur Erzeugung wenigstens eines Kennfelds, Kennfelder, Kontrollsysteme, Kompressorsysteme, Computerprogramme und Verfahren zum Komprimieren eines gasförmigen Energieträgers.

## Beschreibung

Die vorliegende Erfindung betrifft Verfahren zur Ermittlung wenigstens einer Soll-Stellung mindestens eines Saugventil-Abhebegreifers und/oder mindestens eines Bypass-Ventils eines Kompressorsystems umfassend mindestens einen Kompressor. Sie betrifft ausserdem Verfahren zur Steuerung eines Kompressorsystems umfassend mindestens einen Kompressor. Sie betrifft weiter computerimplementierte Verfahren zur Erzeugung wenigstens eines Kennfelds, Kennfelder, Kontrollsysteme, Kompressorsysteme, Computerprogramme und Verfahren zum Komprimieren eines gasförmigen Energieträgers.

Ein Kompressor ist eine mechanische Vorrichtung, die den Druck eines Gases durch Verringerung seines Volumens erhöht, also das Gas verdichtet. Zudem kann ein Kompressor, ähnlich wie eine Pumpe, Gase durch ein Rohr transportieren. Viele Kompressoren können gestuft werden, indem sie hintereinander zu einem Kompressorsystem zusammengesetzt werden. So wird das Gas in mehreren Schritten (oder Stufen) verdichtet, um den Förderdruck zu erhöhen. Mit jeder Stufe wird das Gas weiter verdichtet und sein Druck und auch seine Temperatur erhöht, sofern keine Kühlung stattfindet.

Nebst vielen anderen Anwendungsgebieten werden Kompressorsysteme im Gastransport in Pipelines, im Seefrachtverkehr, in Erdgasverarbeitungsanlagen, in Kälte- und Klimaanlagen, in Gasturbinensystemen und in Tankstellen zum Betanken von gasförmigen Energieträgern (z.B. Wasserstoff) verwendet.

Ein Verdrängungskompressor ist ein System, das das Gas durch die Verschiebung eines mechanischen Gestänges verdichtet, das das Volumen reduziert. Dazu gehören unter anderem Kolbenverdichter (oder Kolbenkompressoren), welche weiter in Hubkolbenverdichter und Drehkolbenverdichter eingeteilt werden können.

In vielen Anwendungsbereichen werden Kompressorsysteme nicht konstant unter voller Last betrieben. Beispielsweise ändert sich der Bedarf des Durchfluss und/oder der notwendige Ausgangsdruck des zu komprimierenden Gases bei einer Tankanlage eines gasförmigen Energieträgers sehr häufig. Nebst des Durchflusses und des Ausgangsdrucks müssen noch andere Soll-Werte wie beispielsweise die Maximaltemperatur an bestimmten Stellen des Kompressorsystems eingehalten werden. Um die Soll-Werte eines Kompressorsystems zu regeln, werden unter anderem drehzahlgeregelte Antriebe, Saugventil-Abhebegreifer und Bypass-Leitungen eingesetzt.

Kompressorsysteme, welche Kompressoren mit variabler Drehzahl umfassen, wirken in der Theorie sinnvoll zur Regulierung des Durchflusses und anderer Soll-Werte. Der Kompressormotor ist jedoch gewissen technischen Einschränkungen unterstellt, was die Praktikabilität der Drehzahlvariierung vermindert. Beispielsweise ist oft die kleinstmögliche Drehzahl des Kompressormotors nicht klein genug, um den Durchfluss so zu drosseln, dass der benötigte Durchfluss erreicht werden kann.

Deshalb werden auch Saugventil-Abhebegreifer zur Durchflussregelung eingesetzt, wenn die Drehzahländerung nicht möglich oder ausreichend ist, um den erforderlichen Teillastbereich zu erreichen. Die Regelung über Saugventil-Abhebegreifer erfolgt mittels einer Vorrichtung, welche das Saugventil eines Kompressors beim Schritt des Komprimierens des Gases im Verdichtungsraum teilweise oder vollständig offenhält. So entweicht ein Teil des Gases beim Komprimieren wieder aus dem Verdichtungsraum, anstatt komprimiert zu werden. So kann der gewünschte Durchfluss mittels Veränderung der Stellungen der Saugventil-Abhebegreifer und/oder Bypass-Ventile der einzelnen Kompressorstufen eines mehrstufigen Kompressorsystems eingestellt werden.

Bypass-Leitungen werden in Kompressorsystemen für einen ähnlichen Zweck eingesetzt wie Saugventil-Abhebegreifer. Eine Bypass-Leitung verbindet den Auslass eines Kompressors mit dessen Einlass und wird in der Regel über ein Bypass-Ventil geöffnet und geschlossen. Über eine Bypass-Leitung kann bereits komprimiertes Gas aus einem Bereich des Kompressorsystems mit höherem Druck zurück in einen Bereich mit niedrigerem Druck geleitet werden. So kann der Ausgangsdruck und der Durchfluss reguliert werden.

Die Verwendung von mehreren Saugventil-Abhebegreifern, mehreren Bypass-Ventilen, mehreren Kompressormotoren mit variierbarer Drehzahl in einem Kompressorsystem oder einer Kombination davon führt zu einer Vielzahl an möglichen Einstellungen für einen gewünschten Gasdurchfluss. Jede dieser möglichen Einstellungen führt jedoch in den meisten Fällen zu einem unterschiedlichen Energieverbrauch des Kompressorsystems. Es gilt also die Einstellungen zu ermitteln, welche das Erreichen und/oder Einhalten der Soll-Werte (z.B. Durchfluss, Temperaturen, Drucke) möglichst energieeffizient ermöglicht.

Zur Steuerung von einzelnen Kompressoren und von Kompressorsystemen werden im Stand der Technik Kennfelder (auch Lookup-Tabellen (LUT) und Kennlinienfelder genannt) verwendet, welche in der Regel im Steuersystem gespeichert sind und für die Ermittlung von optimalen Drehzahlen und Stellungen von Saugventil-Abhebegreifern und Bypass-Ventilen abgerufen werden.

US 2018356139 A1 (TRANE INT INC, 13. Dezember 2018) offenbart ein Regelsystem und ein Verfahren zur effizienten Benutzung eines Antriebs mit variabler Drehzahl eines Kompressors in Kombination mit mechanischen Abhebegreifern. Dabei wird ein Kennfeld abgerufen, welches auf der Kompressor-Drehzahl und der mechanischen Entladung beruht. Ziel ist die Energieersparnis durch Verringerung des Kompressor-Durchflusses mittels Reduktion der Drehzahl und Verwendung mechanischer Abhebegreifer. Das gemeinsame Verwenden von Kompressor-Antrieben mit variabler Drehzahl und mechanischen Abhebegreifern wird als Vorteil gegenüber der Verwendung von mechanischen Abhebegreifern allein genannt. Nachteilig an diesem Verfahren ist unter anderem die bereits oben beschriebene Verwendung eines Antriebs mit variabler Drehzahl zur Steuerung des Durchflusses. Die technischen Einschränkungen solcher Antriebe in Kompressoren führt beispielsweise dazu, dass die kleinstmögliche Drehzahl des Antriebs noch immer verhältnismässig hoch ist, was unpraktisch für Anwendungen ist, welche sowohl sehr hohe als auch sehr kleine Durchflussmengen benötigen. Weitere Nachteile der Drehzahlregelung sind weiter unten in der Beschreibung des ersten Aspekts der Erfindung aufgeführt.

Aus US 2013173063 A1 (WINKES GEORG, 04. Juli 2013) ist ein Verfahren zum Regeln eines Kompressors bekannt, wobei durch Ermitteln von Stellwerten von Stellelementen mit einem Kennfeld für einen wirkungsgradoptimierten Betrieb des Kompressors gesorgt wird. Ein solches Stellelement kann beispielsweise ein Ventil sein. Ein Kennfeld kann beispielsweise die Leistung, der Durchfluss und die Stellwerte der Stellelemente umfassen. Die Stellwerte werden auf Basis dieses Kennfelds in einem iterativen Prozess mit einem Feedback-Regelkreis eingestellt, bis gewünschte Soll-Werte wie beispielsweise der Durchfluss bei einem möglichst hohen Wirkungsgrad erreicht sind. Das Einstellen der Stellwerte in einem iterativen Prozess ist als Nachteil dieses Verfahrens anzusehen, da es so beispielsweise zu langen Reaktionszeiten des Systems als Antwort auf geänderte Durchfluss-Anforderungen kommen kann. Lange Reaktionszeiten sind jedoch hinsichtlich vieler Anwendungen von Kompressorsystemen unerwünscht.

US 2013129477 A1 (WINKES GEORG, 23. Mai 2013) beschreibt ein Verfahren zur Steuerung eines Kompressors, wobei der Ansaug- sowie der Ausgangsdruck und der Gasdurchfluss gemessen werden. Mit einem Kennfeld wird der Zielwert für einen Pumpenüberlastungsbegrenzer bestimmt. Dieser öffnet oder schliesst ein Bypass-Ventil, wenn beispielsweise der Gasdurchfluss nicht dem Sollwert entspricht. Die Erfindung in US 2013129477 A1 löst das Problem, die Funktionstüchtigkeit eines Kompressors zu erhalten, wenn beispielsweise gewisse Werte, wie zum Beispiel der Ansaug- oder Ausgangsdruck, fehlerhaft gemessen werden. Es werden Kennfelder zur Ermittlung der nötigen Ventilstellungen verwendet, umfassend das Verhältnis zwischen Ansaugdruck und Ausgangsdruck als Funktion des Anstellwinkels des Eintrittsleitapparates oder der Drehzahl. Auch hier ist die Verwendung der Drehzahl-Variierung zur Steuerung eines Kompressorsystems aus den oben genannten Gründen nachteilig. Zudem ermöglicht das beschriebene Verfahren nicht einen möglichst energieeffizienten Betrieb des Kompressorsystems, auch wenn dies für Systeme mit erhöhtem Energiebedarf vorteilhaft wäre.

Hinsichtlich der beschriebenen Nachteile der Verfahren und Vorrichtungen des Stands der Technik besteht nach wie vor Bedarf an Verfahren und Vorrichtungen zur Steuerung von Kompressorsystemen, welche nebst einem möglichst energieeffizienten Betrieb andere Soll-Werte in Betracht ziehen, ohne beispielsweise die Reaktionszeit auf Durchfluss-Bedarfs-Änderungen oder den Bereich der möglich zu fördernden Durchflussmengen zu beeinträchtigen.

Es ist somit Aufgabe der vorliegenden Erfindung, die genannten und weitere Nachteile des Stands der Technik zu lösen und insbesondere ein Verfahren zur Ermittlung von Soll-Stellungen von Saugventil-Abhebegreifern und/oder Bypass-Ventilen eines Kompressorsystems bereit zu stellen, um bei möglichst niedriger Kompressorsystemleistung das Betreiben des Kompressorsystems bei einer Vielzahl an Soll-Werten wie zum Beispiel dem Soll-Durchfluss zu ermöglichen.

Die Aufgabe wird durch ein computerimplementiertes Verfahren zur Ermittlung wenigstens einer Soll-Stellung mindestens eines Saugventil-Abhebegreifers und/oder mindestens eines Bypass-Ventils eines Kompressorsystems; ein Verfahren zur Steuerung eines Kompressorsystems; ein computerimplementiertes Verfahren zur Erzeugung wenigstens eines Kennfelds; Kennfelder; ein Kontrollsystem; ein Kompressorsystem; ein Computerprogramm; und ein Verfahren zum Komprimieren eines gasförmigen Energieträgers gemäss den unabhängigen Patentansprüchen gelöst. Vorteilhafte Ausgestaltungen und Weiterbildungen sind Gegenstand der abhängigen Patentansprüche.

In einem ersten Aspekt der Erfindung wird die Aufgabe insbesondere gelöst mit einem computerimplementierten Verfahren zur Ermittlung wenigstens einer Soll-Stellung mindestens eines Saugventil-Abhebegreifers und/oder mindestens eines Bypass-Ventils eines Kompressorsystems zum Komprimieren eines Gases. Das Kompressorsystem umfasst mindestens einen Kompressor und das Verfahren umfasst die folgenden Schritte I. bis III.:
I. Empfangen wenigstens eines Ist-Wertes. Dabei ist der wenigstens eine Ist-Wert vorzugsweise
   - eine Ist-Eingangstemperatur des Kompressorsystems und/oder des mindestens einen Kompressors,
   - ein Ist-Ausgangsdruck des Kompressorsystems und/oder des mindestens einen Kompressors,
   - ein Ist-Eingangsdruck (pE) des Kompressorsystems (KS) und/oder des mindestens einen Kompressors (K) ist,
   - die Gaszusammensetzung des zu komprimierenden Gases ist, oder
   - eine Kombination davon.
II. Empfangen wenigstens eines Soll-Wertes. Dabei ist der wenigstens eine Soll-Wert vorzugsweise
   - ein Soll-Durchfluss,
   - eine maximale Soll-Ausgangstemperatur des Kompressorsystems und/oder des mindestens einen Kompressors,
   - ein Soll-Ausgangsdruck des Kompressorsystems und/oder des mindestens einen Kompressors, oder
   - eine Kombination davon.
III. Bestimmen wenigstens einer Soll-Stellung des mindestens einen Saugventil-Abhebegreifers und/oder mindestens einen Bypass-Ventils. Dieser Schritt erfolgt gemäss den Schritten
   i. Empfangen wenigstens eines Kennfeldes;
   ii. Bestimmen der wenigstens einen Soll-Stellung des mindestens einen Saugventil-Abhebegreifers und/oder des mindestens einen Bypass-Ventils basierend auf dem wenigstens einen Kennfeld, dem wenigstens einen Ist-Wert und dem wenigstens einen Soll-Wert. Dabei sollte mindestens eine der folgenden Bedingungen eingehalten werden:
      - der Soll-Durchfluss wird im Wesentlichen ermöglicht,
      - die Leistung des Kompressorsystems (KS) und/oder des mindestens einen Kompressors (K) ist möglichst niedrig,
      - der Wirkungsgrad des Kompressorsystems (KS) und/oder des mindestens einen Kompressors (K) ist möglichst hoch,
      - der spezifische Energieverbrauch des Kompressorsystems (KS) und/oder des mindestens einen Kompressors (K) ist möglichst niedrig,
      - die maximale Soll-Ausgangstemperatur des Kompressorsystems und/oder des mindestens einen Kompressors wird nicht überschritten,
      - der Soll-Ausgangsdruck des Kompressorsystems und/oder des mindestens einen Kompressors wird im Wesentlichen ermöglicht, oder
      - eine Kombination davon.

Im Rahmen der vorliegenden Erfindung kann als Kompressorsystem eine aus mehreren Kompressorstufen zusammengesetzte Kompressor-Vorrichtung verstanden werden. In diesem Fall ist der mindestens eine Kompressor als mindestens eine Kompressorstufe zu verstehen. Eine Kompressorstufe kann mehrere Kompressionskammern umfassen. Eine Kompressorstufe in einer ein- oder mehrstufigen Kompressor-Vorrichtung ist dadurch gekennzeichnet, dass der Gasdruck durch die Kompressorstufe erhöht werden kann. Der Eingangsdruck einer Kompressorstufe ist daher niedriger als deren Ausgangsdruck, sofern das Ansaugventil nicht durch Abhebegreifer so offengehalten wird, dass keine Verdichtung des Gases stattfindet. Das Kompressorsystem kann aber auch als ein aus mehreren einzelnen Kompressoren zusammengesetztes System verstanden werden.

In der vorliegenden Erfindung kann das zu komprimierende Gas sowohl als Reinstoff als auch als Mischung vorkommen. Ein Reinstoff wäre hierbei eine Form des Gases, die aus nur einem einzigen Element oder einer einzigen Verbindung besteht. Eine Mischung besteht aus mindestens zwei Elementen und/oder Verbindungen.

Ein Saugventil-Abhebegreifer ist eine Vorrichtung in einem Kompressor, um das eingeschlossene Gas in der Kompressionskammer abzulassen. Ein Saugventil-Abhebegreifer kann dazu verwendet werden, um das Saugventil während des Kompressor-Betriebs teils oder ganz offen zu halten. So wird das Gas (oder ein Teil davon) in der Kompressionskammer nicht verdichtet. Dieses Vorgehen kann beispielsweise zur Regulierung des Durchflusses eingesetzt werden. Saugventil-Abhebegreifer (engl.: suction valve unloader) werden auch als Saugventil-Entlader, Ansaugventil-Entlaster, Saugventil-Abhebungen, Saugventil-Abheber und Entlastungsvorrichtungen bezeichnet.

Für das erfindungsgemässe Verfahren kommen alle Arten von Saugventil-Abhebegreifern in Frage, insbesondere Finger-, Stopfen- und Port-Saugventil-Abhebegreifer, wobei Stopfen- und Port-Saugventil-Abhebegreifer bevorzugt sind. Saugventil-Abhebegreifer können beispielsweise pneumatisch betrieben werden.

Im Zusammenhang mit Kompressorsystemen werden Bypass-Ventile in Bypass-Leitungen zur Regulierung dessen Durchflusses verwendet. Bypass-Leitungen verbinden den Ausgang einer Kompressorstufe mit dem Eingang derselben Kompressorstufe oder mit dem Eingang einer vorangehenden Kompressorstufe. Bypass-Leitungen können zum Druckausgleich und zum Regulieren des Durchflusses verwendet werden.

Im Rahmen der vorliegenden Erfindung können die Stellungen der Saugventil-Abhebegreifer und/oder der Bypass-Ventile zum einen diskret verändert werden. Im Fall von Saugventil-Abhebegreifern bedeutet das, dass es eine Stellung gibt, welche den maximal möglichen Durchfluss (100 %) durch den Verdichtungsraum ermöglicht. In diesem Fall wird das wenigstens eine Saugventil vom wenigstens einen Abhebegreifer gar nicht offengehalten. Ausserdem gibt es Stellungen, welche den Durchfluss durch den Verdichtungsraum in diskreten Abständen verringern. Beispielsweise kann es zwei weitere mögliche Stellungen geben, bei denen jeweils 50 % oder 75 % des maximal möglichen Durchflusses durch den Verdichtungsraum ermöglicht werden.

Das System kann zum anderen aber auch so konfiguriert sein, dass der Durchfluss durch Änderung der Stellungen der Saugventil-Abhebegreifer und/oder Bypass-Ventile fortlaufend regulierbar ist. Im Fall von Saugventil-Abhebegreifern bedeutet das, dass im Wesentlichen jeder Durchfluss kontinuierlich zwischen einem minimalen und maximalen Durchfluss durch den Verdichtungsraum (z.B. 50 % und 100 %) eingestellt werden kann.

Eine Datenverbindung zwischen den Saugventil-Abhebegreifer, respektive den Bypass-Ventilen mit einem Steuersystem erlaubt das Empfangen der Ist-Stellungen, sowie das Einstellen von Soll-Stellungen.

Im Rahmen der vorliegenden Erfindung ist der Begriff «oder» als eine ausschliessende Disjunktion zu verstehen. «A oder B» sagt aus, dass genau eine der beiden Aussagen wahr ist (wenn die Disjunktion wahr ist).

Das erfindungsgemässe Verfahren kann insbesondere zur Ermittlung von Soll-Stellungen von Kompressorsystemen umfassend Hubkolbenkompressoren verwendet werden.

Der wenigstens eine Ist-Wert (auch Ist-Betriebsparameter) wird mit (einem) Sensor(en) in dem/den Kompressor(en) ermittelt und wird in einer Datenverarbeitungsvorrichtung empfangen. Die Datenverbindung zwischen den Sensoren und der Datenverarbeitungsvorrichtung kann dabei drahtgebunden oder drahtlos sein; oder eine Kombination mehrerer Verbindungsarten. Geeignete drahtgebundene Verbindungen sind die dem Fachmann bekannten Twisted-Pair-, Koaxial-, Ethernet- und Glasfaserkabel. Geeignete drahtlose Verbindungen sind Wireless Personal Area Networks (WPAN; z. B. Bluetooth), Wireless Local Area Networks (WLAN), Wireless Wide Area Networks (WWAN; z. B. für Mobiltelefonsignale) und Wireless Metropolitan Area Networks (WMAN), die dem Fachmann bekannt sind. Ferner kann die Datenverarbeitungsvorrichtung vom Kompressorsystem örtlich getrennt sein und der Zugriff über ein Personal Area Network (PAN), ein Local Area Network (LAN), ein Metropolitan Area Network (MAN), ein Global Area Network (GAN) oder jede andere Art von geeignetem Computernetzwerk erfolgen.

Im Rahmen der vorliegenden Erfindung ist ein Ist-Wert ein spezifischer Wert oder eine Messgrösse, der oder die ein bestimmtes System oder eine Maschine zu einem bestimmten Zeitpunkt aufweist. Insbesondere werden Ist-Temperaturen und Ist-Drucke mittels Sensoren ermittelt, welche als Ist-Werte empfangen werden. Ein Ist-Eingangswert wird beim Eingang des Kompressorsystems oder eines einzelnen Kompressors gemessen. Ein Ist-Ausgangswert wird beim Ausgang des Kompressorsystems oder eines einzelnen Kompressors gemessen. Die Eingangstemperatur und der Eingangsdruck werden auch als Ansaugtemperatur und Ansaugdruck bezeichnet.

Als Eingang des Kompressorsystems wird im Rahmen der vorliegenden Erfindung der Punkt verstanden, in dem das zu komprimierende Gas ins Kompressorsystem einfliesst. Der Eingang des Kompressorsystems muss nicht zwingend dem Eingang des ersten Kompressors im Kompressorsystem entsprechen. Als Ausgang des Kompressorsystems wird im Rahmen der vorliegenden Erfindung der Punkt verstanden, aus dem das zu komprimierende Gas aus dem Kompressorsystem herausfliesst. Der Ausgang des Kompressorsystems muss nicht zwingend dem Ausgang des letzten Kompressors im Kompressorsystem entsprechen.

Bei einer Gasmischung besteht die Gaszusammensetzung des zu komprimierenden Gases im Rahmen der vorliegenden Erfindung aus dem Mengenverhältnis oder Massenverhältnis der einzelnen Spezies des Gases. Bei einem Kompressorsystem, mit welchem immer dasselbe Gas komprimiert wird, ist die Gaszusammensetzung vorzugsweise in einem internen Datenspeicher gespeichert. Können verschiedene Gase mit dem Kompressorsystem komprimiert werden, kann die aktuell verwendete Gaszusammensetzung vorzugsweise durch eine Nutzereingabe ausgewählt werden.

Im Rahmen der vorliegenden Erfindung wird als Soll-Wert (auch Soll-Betriebsparameter) ein spezifischer Wert oder eine Messgrösse verstanden, der/die beim Betrieb eines Systems angestrebt werden soll, damit das System ein optimales Verhalten zeigt, um eine bestimmte Funktion zu erfüllen. Ein Soll-Wert kann beispielsweise durch eine Benutzereingabe definiert werden. Er kann jedoch auch von einem anderen, nicht-menschlichen System oder von einem internen Datenspeicher empfangen werden. Ein anderes System kann eine Kraftstoff-Regelanlage (engl.: fuel gas control system, FGCS) sein, beispielsweise eine Wasserstoff-Tankanlage für Kraftfahrzeuge. Das Kompressorsystem kann von der Regelanlage einen bestimmten Durchflussbedarf als Soll-Wert empfangen.

In der Fachsprache der Gasbeförderung- und komprimierung wird als Durchfluss die Menge des das System durchfliessende Gas verstanden. Der Durchfluss kann als Massenstrom (Masse pro Zeiteinheit) oder Volumenstrom (Volumen pro Zeiteinheit) angegeben werden und wird auch als "Kapazität", "Liefermenge" und "Liefergrad" bezeichnet. Der Durchfluss kann mit dem Fachmann bekannten Sensoren gemessen werden.

Im Rahmen der vorliegenden Erfindung kann ein Soll-Durchfluss auch aus mehreren Soll-Teildurchflüssen zusammengesetzt werden. Das Gas kann an verschiedenen Stellen des Systems entnommen werden, was eine gezielte Nutzung ermöglicht. So kann ein einzelnes System das Gas in verschiedenen Drücken liefern, ohne dass der Ausgangsdruck des Kompressorsystems verändert werden muss.

Das Festlegen einer maximalen Soll-Ausgangstemperatur des Kompressorsystems oder einzelner Kompressorstufen verhindert das Überhitzen wärmeempfindlicher Komponenten des Systems.

Das Festlegen des Soll-Ausgangsdrucks des Kompressorsystems ermöglicht das Einhalten eines benötigten Druckbereichs eines an das Kompressorsystem angeschlossene System, beispielsweise eine Kraftstoff-Tankanlage. Zudem wird die Gefahr eines Überdrucks im System durch Einhalten eines Soll-Ausgangsdruck einzelner Kompressorstufen verhindert.

Das wenigstens eine Kennfeld ist als funktionelle, maschinenlesbare Datendatei im Steuersystem gespeichert oder wird von einem externen System im Steuersystem empfangen. Ein Kennfeld stellt ein Modell des Kompressorsystems oder eines Teils des Kompressorsystems dar. Ein Kennfeld kann auf verschiedene Arten abgespeichert werden. Beispielsweise kann es in Form einer Lookup-Tabelle (engl.: Lookup Table, LUT) abgespeichert werden, wobei die Werte zwischen zwei oder mehr Spalten miteinander verknüpft sind. So können beispielsweise die benötigten Stellungen einzelner Saugventil-Abhebegreifer ermittelt werden, wenn andere Werte wie der Soll-Durchfluss bekannt sind. Alternativ können die Daten einer Lookup-Tabelle auch mit einer Regressionsanalyse verarbeitet werden, wobei das Ergebnis der Regressionsanalyse als mathematische Formel(n) abgespeichert und bei Bedarf abgerufen wird. Kennfelder werden experimentell bestimmt und/oder mittels Simulation des Kompressorsystems oder einem Teil des Kompressorsystems ermittelt. Die Kennfelder für ein bestimmtes Kompressorsystem können sich stark unterscheiden von den Kennfeldern für ein anderes Kompressorsystem. Deshalb müssen die Kennfelder für jedes Kompressorsystem individuell experimentell und/oder mittels Simulationen ermittelt werden.

Beim Bestimmen der wenigstens einen Soll-Stellung des mindestens einen Saugventil-Abhebegreifers und/oder des mindestens einen Bypass-Ventils ermittelt das Steuersystem mittels Sortier-Algorithmus und Kennfelder die Soll-Stellungen, welche das Einhalten der erfindungsgemässen Bedingungen ermöglichen. Der spezifische Energieverbrauch ist ein Mass für den Energiebedarf pro Masse oder pro Volumen des geförderten Gases.

Die Kompressorsystemleistung (in Watt) umfasst die Leistung, welche nötig ist, um die Kompressoren und die zugehörigen Komponenten anzutreiben. Der Wirkungsgrad ist ein Mass für die Effizienz des Kompressorsystems oder eines einzelnen Kompressors. Er beschreibt, wie viel Energie bei der Nutzung des Systems in eine nützliche Form umgewandelt wird.

Die im Rahmen der vorliegenden Erfindung zu erreichenden Soll-Werte sind mit einer zu erwartbaren und vertretbaren Unsicherheit verbunden. So kann beispielsweise der mit bestimmten Stellwerten tatsächlich erreichte Durchfluss vom durch das Kennfeld erwartbaren Durchfluss um einen gewissen Faktor abweichen. Insbesondere kann es bei einer Laufzeit, welche sich über mehrere Jahre erstreckt, zu solchen Abweichungen kommen. Die Abweichungen und die vertretbaren Toleranzbereiche sind für jedes Kompressorsystem und jeden Parameter individuell zu bestimmen.

Es ist möglich, dass nebst der kennfeldbasierten Steuerung einzelner Komponenten des Systems ein weiteres Kontrollsystem für andere Komponenten eingesetzt wird. Ein weiteres Kontrollsystem kann beispielsweise ein Regler sein, insbesondere ein PID-Regler (PID: Proportional, Integral, Derivative), welche diese anderen Komponenten mittels Rückkoppelungsschleife kontrolliert. Beispielsweise können Bypass-Ventile statt über die kennfeldbasierte Steuerung mit einem solchen PID-Regler kontrolliert werden.

Es hat sich gezeigt, dass bei Kompressorsystemen, bei denen die Stellungen von Saugventil-Abhebegreifern mit dem erfindungsgemässen Verfahren gesteuert werden, weniger komprimiertes Gas durch die Bypass-Leitungen zurückfliesst als bei anderen Verfahren. Je geringer der Rückfluss über die Bypass-Leitungen ist, desto grösser ist die Energieeinsparung.

Es hat sich insbesondere gezeigt, dass der Soll-Ausgangsdruck und der Soll-Durchfluss des Kompressorsystems durch die kennfeldbasierte Steuerung der Zwischendrücke zwischen einzelnen Kompressoren im erfindungsgemässen Verfahren besonders energieeffizient und mit kurzer Reaktionszeit, sowohl präzise als auch akkurat, eingestellt werden können.

Die im Verfahren des ersten Aspekts der Erfindung bestimmten Soll-Stellungen können also dazu verwendet werden, ein Kompressorsystem bei möglichst niedriger Kompressorleistung zu betreiben. Dabei kann der Soll-Durchfluss variiert werden und eine Vielzahl an weiteren Soll-Werten können ebenfalls eingehalten werden, um den optimalen Betrieb des Kompressorsystems zu gewährleisten. Das ermöglicht eine Optimierung der Energieeffizienz. Das Verfahren löst technische Aufgaben, welche von den Verfahren des Stands der Technik nicht gelöst werden:
Insbesondere ermöglicht das erfindungsgemässe Verfahren, dass die Drehzahl der Kompressoren nicht variiert werden muss, um den gewünschten Durchfluss und andere Soll-Werte zu erreichen. Denn die Mindestdrehzahl der Motoren gängiger Hubkolbenkompressoren reicht häufig nicht aus, um die erforderliche Reduzierung des Durchflusses zu erreichen. Im Verfahren der vorliegenden Erfindung können alle für den bestimmungsgemässen Gebrauch notwendigen Durchflüsse erreicht werden, ohne die Drehzahl der Kompressoren des Kompressorsystems wesentlich zu verändern. Da nur Stellungen von Saugventil-Abhebegreifern und Bypass-Ventilen variiert werden, wird eine sehr gute Kontrolle über das Kompressorsystem ermöglicht, ohne die Drehzahl anpassen zu müssen.

Zudem ist durch die Verwendung von Kennfeldern, die mit den erfindungsgemässen Ist-Werten, insbesondere der Ist-Eingangstemperatur und/oder dem Ist-Ausgangsdruck, des Kompressorsystems und/oder mindestens eines Kompressors das Ermitteln optimaler Soll-Stellungen ermöglichen, kein iteratives Einstellen der Soll-Stellungen nötig, um die gewünschten Soll-Betriebswerte zu erreichen. Das heisst, dass beispielsweise der Ist-Durchfluss und der Leistungsverbrauch eines Kompressors und/oder des Kompressorsystems nicht in einer Feedback-Schleife gemessen und zum Ermitteln der Soll-Stellungen verwendet werden. Dies führt zu schnelleren Reaktionszeiten des Kompressorsystems, beispielsweise wenn sich der Soll-Durchfluss ändert.

Darüber hinaus verhindert das erfindungsgemässe Verfahren aufgrund seiner modellbasierten Ermittlung der Stellungen das Auftreten von Störungen, beispielsweise durch einen übermässigen Verschleiss einzelner Komponenten durch Überhitzen.

In einer bevorzugten Ausführungsform des ersten Aspekts der Erfindung wird wenigstens eine Soll-Stellung mindestens eines Stellzylinders zur Regulierung des Schadraumvolumens ermittelt. Diese Ermittlung erfolgt zusätzlich oder als Alternative zur Ermittlung der wenigstens einen Soll-Stellung mindestens eines Saugventil-Abhebegreifers und/oder mindestens eines Bypass-Ventils.

Vorzugsweise wird mehr als ein Kennfeld mit jeweils unterschiedlichen Parametern des Kompressorsystems empfangen.

Es hat sich gezeigt, dass das Modellieren von einzelnen Teilbereichen des Kompressorsystems mit jeweils einem Kennfeld pro Teilbereich besonders vorteilhaft ist für die effiziente Steuerung des Kompressorsystems.

In einer bevorzugten Ausführungsform des ersten Aspekts des erfindungsgemässen Verfahrens umfasst das wenigstens eine Kennfeld in Schritt III. einen ersten Wert, ausgewählt aus der Gruppe bestehend aus den folgenden Werten:
- Leistung (P) des Kompressorsystems (KS) und/oder des mindestens einen Kompressors (K),
- Wirkungsgrad des Kompressorsystems (KS) und/oder des mindestens einen Kompressors (K),
- spezifischer Energieverbrauch des Kompressorsystems (KS) und/oder des mindestens einen Kompressors (K),
- Durchfluss, und
- Ausgangstemperatur des Kompressorsystems und/oder des mindestens einen Kompressors.

Dieser erste Wert des wenigstens einen Kennfelds wird als Funktion von wenigstens zwei anderen Werten aufgeführt. Diese wenigstens zwei anderen Werte sind ausgewählt aus der Gruppe bestehend aus den folgenden Parametern:
- Eingangstemperatur des Kompressorsystems und/oder des mindestens einen Kompressors,
- Ausgangsdruck des Kompressorsystems und/oder des mindestens einen Kompressors,
- Eingangsdruck des Kompressorsystems (KS) und/oder des mindestens einen Kompressors,
- Gaszusammensetzung des zu komprimierenden Gases, und
- Stellung(en) des mindestens einen Saugventil-Abhebegreifers und/oder des mindestens einen Bypass-Ventils.

Es hat sich gezeigt, dass Kennfelder umfassend die genannten Werte besonders gut geeignet sind, um Soll-Stellungen eines Kompressorsystems zu ermitteln, damit bestimmte Bedingungen, wie ein möglichst geringer Leistungsverbraucht, eingehalten werden können.

In einer weiteren bevorzugten Ausführungsform des Verfahrens des ersten Aspekts der Erfindung ist einer der wenigstens zwei anderen Werte die Stellung(en) des mindestens einen Saugventil-Abhebegreifers und/oder des mindestens einen Bypass-Ventils.

In einer anderen bevorzugten Ausführungsform des Verfahrens des ersten Aspekts der Erfindung ist der mindestens eine Kompressor mindestens ein Hubkolbenkompressor.

In einer weiteren bevorzugten Ausführungsform umfasst das Kompressorsystem mindestens zwei Kompressoren.

Wie oben beschrieben kann der mindestens eine Kompressor des erfindungsgemässen Verfahrens auch als mindestens eine Kompressorstufe einer mehrstufigen Kompressor-Vorrichtung verstanden werden.

Es ist besonders anspruchsvoll, Kompressorsysteme, die aus mehreren Kompressoren in Serie zusammengesetzt sind (oder mehrstufige Kompressor-Vorrichtungen) energieeffizient zu betreiben. Das erfindungsgemässe Verfahren eignet sich insbesondere, solche Systeme zu steuern. Dabei können unterschiedliche Kennfelder zur Steuerung einzelner Segmente des Systems verwendet werden, wobei ein Segment aus einem oder mehreren Kompressoren des Kompressorsystems besteht. Bei einer mehrstufigen Kompressor-Vorrichtung besteht ein Segment aus einer oder mehreren Kompressorstufen. So können Zwischendrücke und der Enddruck des Systems optimal kontrolliert und das System möglichst energieeffizient betrieben werden.

Ein zweiter Aspekt der Erfindung zur Lösung der gestellten Aufgabe ist ein Verfahren zur Steuerung eines Kompressorsystems umfassend mindestens einen Kompressor mit einem Steuersystem. Das Verfahren umfasst die folgenden Schritte:
i. Ermitteln wenigstens eines Ist-Wertes, wobei der wenigstens eine Ist-Wert vorzugsweise
   - eine Ist-Eingangstemperatur des Kompressorsystems und/oder des mindestens einen Kompressors ist,
   - ein Ist-Ausgangsdruck des Kompressorsystems und/oder des mindestens einen Kompressor ist,
   - ein Ist-Eingangsdruck des Kompressorsystems und/oder des mindestens einen Kompressors ist, oder
   - eine Kombination davon ist;
ii. Ermitteln im Steuersystem wenigstens einer Soll-Stellung mindestens eines Saugventil-Abhebegreifers und/oder mindestens eines Bypass-Ventils gemäss dem Verfahren des ersten Aspekts der Erfindung; und
iii. Einstellen der in Schritt ii. ermittelten wenigstens einen Soll-Stellung des mindestens einen Saugventil-Abhebegreifers und/oder mindestens einen Bypass-Ventils.

Dieser zweite Aspekt der Erfindung umfasst die Erfassung der Ist-Wert im Kompressorsystem sowie das Einstellen der ermittelten Soll-Stellungen im Kompressorsystem. Das Ermitteln der Soll-Stellungen wird gemäss dem Verfahren des ersten Aspekts der Erfindung gemacht.

Das Ermitteln des wenigstens einen Ist-Wertes erfolgt mittels einem für den jeweiligen Wert sinnvollen Sensor. Das Kompressorsystem ist wie oben im Detail beschrieben mit entsprechenden Temperatur- und/oder Drucksensoren ausgestattet.

Das Steuersystem gemäss dem erfindungsgemässen Verfahren ist eine Datenverarbeitungsvorrichtung, welche über eine Datenverbindung mit den Sensoren sowie Aktuatoren der Saugventil-Abhebegreifer und/oder der Bypass-Ventile des Kompressorsystems verknüpft sind. Dies ermöglicht das Empfangen der Sensordaten als Ist-Werte sowie das Senden von Anweisungen an die Saugventil-Abhebegreifer und/oder Bypass-Ventile, um die Stellungen einzustellen. Ebenso können die aktuellen Stellungen empfangen werden.

Die Art der Datenverbindung kann dabei wie oben im Detail beschrieben drahtlos und/oder drahtgebunden erfolgen. Zudem kann das Steuersystem räumlich vom wenigstens einen Kompressor getrennt sein. Das heisst, die Steuerung kann beispielsweise in einem Cloud-Steuersystem erfolgen, wobei die Sensordaten zum Cloud-Steuersystem gesendet werden und die einzustellenden Soll-Stellungen vom Cloud-Steuersystem empfangen werden.

Die Schritte des Verfahrens werden in zeitlichen Abständen wiederholt. So wird der wenigstens eine Ist-Wert erneut bestimmt, nachdem die ermittelten Soll-Stellungen eingestellt wurden. Typischerweise wird bei bestimmungsgemässem Betrieb des Kompressorsystems eine Stellung eines Saugventil-Abhebegreifers und/oder eines Bypass-Ventils 0 bis 20 Mal pro Stunde, vorzugsweise 1 bis 10 Mal pro Stunde, am meisten bevorzugt 2 bis 5 Mal pro Stunde geändert.

Die Vorteile des zweiten Aspekts der Erfindung entsprechen denen des ersten Aspekts der Erfindung, welche weiter oben beschrieben wurden. Insbesondere ermöglicht der zweite Aspekt der Erfindung einen verbesserten Betrieb von Kompressorsystemen, wobei unter anderem der Energieverbrauch reduziert werden kann.

In einer bevorzugten Ausführungsform des ersten und/oder des zweiten Aspekts des erfindungsgemässen Verfahrens können in Schritt III.i die folgenden Kennfelder empfangen werden:
Ein erstes Kennfeld kann empfangen werden umfassend die Leistung des Kompressorsystems als Funktion der Eingangstemperatur des Kompressorsystems und/oder des mindestens einen Kompressors; und der Stellung(en) des mindestens einen Saugventil-Abhebegreifers und/oder des mindestens einen Bypass-Ventils.

Ein zweites Kennfeld kann empfangen werden umfassend der Durchfluss als Funktion der Eingangstemperatur des Kompressorsystems und/oder des mindestens einen Kompressors; und der Stellung(en) des mindestens einen Saugventil-Abhebegreifers und/oder des mindestens einen Bypass-Ventils.

Die Verwendung des ersten und/oder zweiten Kennfelds erlauben das Einstellen des zum jeweiligen Zeitpunkt benötigten Soll-Durchfluss bei einer für das System möglichst geringen Leistung.

Vorzugsweise wird im ersten und/oder zweiten Kennfeld die Eingangstemperatur eines ersten Kompressors des Kompressorsystems und die Stellungen der Saugventil-Abhebegreifer des ersten und eines zweiten Kompressors des Kompressorsystems als Parameter verwendet.

Ausserdem kann in derselben Ausführungsform ein drittes Kennfeld empfangen werden umfassend die Ausgangstemperatur des Kompressorsystems und/oder des mindestens einen Kompressors als Funktion der Eingangstemperatur des Kompressorsystems und/oder des mindestens einen Kompressors, und der Stellung(en) des mindestens einen Saugventil-Abhebegreifers und/oder des mindestens einen Bypass-Ventils.

Die Verwendung des dritten Kennfelds verhindert, dass in gewissen Bereichen des Kompressorsystems, welche zum starken Erwärmen neigen, bestimmte Höchsttemperaturen nicht überschritten werden. So kann für den/die jeweilige(n) Bereich(e) eine Höchsttemperatur bestimmt werden, die es nicht zu überschreiten gilt.

Vorzugsweise wird im dritten Kennfeld die Ausgangstemperatur des zweiten Kompressors des Kompressorsystems und die Stellungen der Saugventil-Abhebegreifer des ersten und des zweiten Kompressors des Kompressorsystems als Parameter verwendet.

Weiter kann ein viertes Kennfeld empfangen werden umfassend der Durchfluss als Funktion des Ausgangsdrucks des Kompressorsystems und/oder des mindestens einen Kompressors; und der Stellung(en) des mindestens einen Saugventil-Abhebegreifers und/oder des mindestens einen Bypass-Ventils.

Schliesslich kann ein fünftes Kennfeld empfangen werden umfassend die Leistung des Kompressorsystems als Funktion des Ausgangsdrucks des Kompressorsystems und/oder des mindestens einen Kompressors; und der Stellung(en) des mindestens einen Saugventil-Abhebegreifers und/oder des mindestens einen Bypass-Ventils.

Die Steuerung des Kompressorsystems mit dem Ausgangsdruck des Kompressorsystems und/oder mindestens eines Kompressors mit dem vierten und/oder fünften Kennfeld führt zu einer weiteren Verbesserung des Kompressorbetriebs, da damit der Soll-Durchfluss noch besser eingestellt werden kann und der Betrieb noch energieeffizienter gemacht werden kann.

Vorzugsweise wird im vierten und/oder fünften Kennfeld der Ausgangsdruck des zweiten Kompressors des Kompressorsystems und die Stellungen des Saugventil-Abhebegreifers eines dritten Kompressors des Kompressorsystems als Parameter verwendet.

Es kann entweder ein einzelnes Kennfeld ausgewählt aus dem ersten bis fünften Kennfeld verwendet werden oder eine Kombination dieser Kennfelder.

In einer bevorzugten Ausführungsform des ersten und/oder des zweiten Aspekts des erfindungsgemässen Verfahrens wird wenigstens ein Korrekturfaktor zur Korrektur
- der Kompressorsystemleistung,
- des Durchflusses,
- der Ausgangstemperatur des Kompressorsystems und/oder des mindestens einen Kompressors, oder
- einer Kombination davon
verwendet, um die wenigstens eine Soll-Stellung in Schritt III. zu bestimmen.

Die Korrekturfaktoren können in Form von weiteren Kennfeldern oder von konstanten Werten zur Verbesserung des Kompressorsystemmodells verwendet werden. Mittels Simulationen und/oder Messungen vom physischen Kompressorsystem können diese Korrekturfaktoren ermittelt werden.

In einer weiteren bevorzugten Ausführungsform des ersten und/oder des zweiten Aspekts des erfindungsgemässen Verfahrens wird der in Schritt II. empfangene Soll-Wert, vorzugsweise der empfangene Soll-Durchfluss, vom Steuersystem mit einem vordefinierten Faktor zu einem Pseudo-Soll-Wert angepasst, wenn der wenigstens eine in Schritt I. empfangene Ist-Wert, vorzugsweise der empfangene Ist-Ausgangsdruck des Kompressorsystems und/oder des mindestens einen Kompressors, einen vordefinierten Grenzbereich verlässt.

Die vordefinierten Faktoren und die Bedingungen, welche nötig sind, damit diese Faktoren angewendet werden, sind im Steuersystem gespeichert. Die Faktoren und Grenzbereiche werden für das entsprechende Kompressorsystem simuliert und/oder experimentell bestimmt.

Diese Anpassung ermöglicht das schnellere Erreichen des tatsächlichen Soll-Durchfluss, wenn der Soll-Durchfluss durch eine plötzliche Änderung der Durchfluss-Nachfrage stark ansteigt.

In einer weiteren bevorzugten Ausführungsform des ersten und/oder des zweiten Aspekts des erfindungsgemässen Verfahrens wird die wenigstens eine Soll-Ventilstellung des mindestens einen Bypass-Ventils mit einem Regler, vorzugsweise mit einem PID-Regler, bestimmt. Zusätzlich dazu oder als Alternative dazu bleibt die Drehzahl des mindestens einen Kompressors im Wesentlichen unverändert.

Es hat sich gezeigt, dass ein energieeffizienter Betrieb statt mit einer Kennfeld-basierten Steuerung von Bypass-Ventilen, mit einer Regelung dieser Bypass-Ventile sichergestellt werden kann. Ein Regler, insbesondere ein PID-Regler, der die Stellungen der Bypass-Ventile steuert, kann zur Feinregelung der Zwischendrücke und des Enddrucks eingesetzt werden, um rasch auf Bedarfsänderungen zu reagieren und einen sicheren Betrieb des Kompressorsystems zu gewährleisten.

Ein dritter Aspekt der vorliegenden Erfindung betrifft ein computerimplementiertes Verfahren zur Erzeugung wenigstens eines Kennfelds mittels (i) Simulation eines Kompressorsystems und/oder (ii) experimenteller Datenermittlung zur Verwendung des wenigstens einen Kennfelds in einem Verfahren des ersten oder zweiten Aspekts der Erfindung.

Die Simulation des Kompressorsystems ist dabei vorzugsweise eine numerische Simulation, wobei das gesamte Kompressorsystem mit allen zugehörigen Komponenten in einem physikalischen Modell abgebildet werden. Als Grundlage für das physikalische Modell dienen die Massen- und Energiebilanz. Das Ergebnis der Simulation wird dabei iterativ ermittelt, weil die physikalischen Eigenschaften des Gases abhängig sind vom Zustand an jedem Punkt des Verdichtungsprozesses. Die Eingangsgrössen für die Simulation umfassen die Ansaugtemperatur; den Ansaugdruck; die Gaszusammensetzung; den Ausgangsdruck; die Kompressorgeometrie, umfassend der Kolbendurchmesser, der Kompressorhub und Ventildaten; und weitere Systemparameter, umfassend Kühlwassertemperatur, Umgebungstemperatur, Drehzahl und Sicherheitsventildrücke. Ein Kennfeld wird mittels Variation eines oder mehrerer Parameter in einem bestimmten Bereich erstellt.

Ein vierter Aspekt der Erfindung betrifft ein Kennfeld zur Verwendung in einem Verfahren gemäss dem ersten und/oder zweiten Aspekt, wobei das Kennfeld einen ersten Wert umfasst, ausgewählt aus der Gruppe bestehend aus
- Leistung des Kompressorsystems und/oder des mindestens einen Kompressors,
- Wirkungsgrad des Kompressorsystems und/oder des mindestens einen Kompressors,
- spezifischer Energieverbrauch des Kompressorsystems und/oder des mindestens einen Kompressors,
- Durchfluss, und
- Ausgangstemperatur des Kompressorsystems und/oder des mindestens einen Kompressors,
als Funktion von
- Stellung(en) mindestens eines Saugventil-Abhebegreifers und/oder des mindestens eines Bypass-Ventils, und
- wenigstens eines anderen Wertes, ausgewählt aus der Gruppe bestehend aus
   - Eingangstemperatur des Kompressorsystems und/oder des mindestens einen Kompressors,
   - Ausgangsdruck des Kompressorsystems und/oder des mindestens einen Kompressors,
   - Eingangsdruck des Kompressorsystems und/oder des mindestens einen Kompressors, und
   - Gaszusammensetzung des zu komprimierenden Gases.

In einer bevorzugten Ausführungsform des vierten Aspekts der Erfindung ist das Kennfeld eines der folgenden Kennfelder:
Ein erstes Kennfeld umfasst die Leistung des Kompressorsystems als Funktion der Eingangstemperatur des Kompressorsystems und/oder des mindestens einen Kompressors; und der Stellung(en) des mindestens einen Saugventil-Abhebegreifers und/oder des mindestens einen Bypass-Ventils.

Ein zweites Kennfeld umfasst den Durchfluss als Funktion der Eingangstemperatur des Kompressorsystems und/oder des mindestens einen Kompressors; und der Stellung(en) des mindestens einen Saugventil-Abhebegreifers und/oder des mindestens einen Bypass-Ventils.

Ein drittes Kennfeld umfasst die Ausgangstemperatur des Kompressorsystems und/oder des mindestens einen Kompressors als Funktion der Eingangstemperatur des Kompressorsystems und/oder des mindestens einen Kompressors; und der Stellung(en) des mindestens einen Saugventil-Abhebegreifers und/oder des mindestens einen Bypass-Ventils.

Ein viertes Kennfeld umfasst den Durchfluss als Funktion des Ausgangsdrucks des Kompressorsystems und/oder des mindestens einen Kompressors; und der Stellung(en) des mindestens einen Saugventil-Abhebegreifers und/oder des mindestens einen Bypass-Ventils.

Ein fünftes Kennfeld umfasst die Leistung des Kompressorsystems als Funktion des Ausgangsdrucks des Kompressorsystems und/oder des mindestens einen Kompressors; und der Stellung(en) des mindestens einen Saugventil-Abhebegreifers und/oder des mindestens einen Bypass-Ventils.

Ein sechster Aspekt der Erfindung betrifft ein Kontrollsystem. Das Kontrollsystem umfasst ein Steuersystem umfassend einen internen Datenspeicher, wobei auf dem internen Datenspeicher wenigstens ein Kennfeld gespeichert ist. Optional umfasst das Kontrollsystem auch einen Regler, vorzugsweise einen PID-Regler. Das Kontrollsystem umfasst auch Mittel, die so angepasst sind, dass sie die Verfahrensschritte des ersten Aspekts der Erfindung ausführen.

Ein siebter Aspekt der Erfindung betrifft ein Kompressorsystem. Das Kompressorsystem umfasst mindestens einen Kompressor, vorzugsweise mindestens einen Hubkolbenkompressor; und wenigstens einen Sensor zum Ermitteln wenigstens eines Ist-Wertes, wobei der wenigstens eine Sensor ein Temperatursensor oder ein Drucksensor ist. Das Kompressorsystem umfasst ausserdem mindestens einen Saugventil-Abhebegreifer im mindestens einen Kompressor und/oder mindestens ein Bypass-Ventil.

Das Kompressorsystem umfasst auch ein Kontrollsystem. Das Kontrollsystem umfasst ein Steuersystem, umfassend einen internen Datenspeicher, umfassend wenigstens ein Kennfeld. Dabei ermöglicht eine erste Datenverbindung das Empfangen des wenigstens einen Ist-Wertes im Steuersystem; und eine zweite Datenverbindung ermöglicht das Steuern des mindestens einen Saugventil-Abhebegreifers und/oder des mindestens einen Bypass-Ventils. Optional umfasst das Kompressorsystem einen Regler, vorzugsweise einen PID-Regler. Dabei ermöglicht eine dritte Datenverbindung das Empfangen des wenigstens einen Ist-Wertes im Regler, vorzugsweise im PID-Regler; und eine vierte Datenverbindung ermöglicht das Regeln des mindestens einen Bypass-Ventils. Das Kompressorsystem ist dadurch gekennzeichnet, dass das Kontrollsystem Mittel umfasst, die so angepasst sind, dass sie die Verfahrensschritte des ersten Aspekts der Erfindung ausführen.

Der zu ermittelnde wenigstens eine Ist-Wert entspricht dem wenigstens einen Ist-Wert des zweiten Aspekts der Erfindung.

Im Rahmen der vorliegenden Erfindung bedeutet der Wortlaut «eine erste Datenverbindung» nicht, dass die erste Datenverbindung beispielsweise aus nur einem Kabel besteht. Die erste Datenverbindung fasst alle drahtgebundenen und drahtlosen Datenverbindungen zwischen dem Steuersystem und allen Sensoren des Systems zusammen. Das gleiche gilt für die restlichen Datenverbindungen: Die zweite Datenverbindung fasst alle Datenverbindungen zwischen dem Steuersystem und allen Saugventil-Abhebegreifern zusammen; die dritte Datenverbindung fasst alle Datenverbindungen zwischen dem Regler und den Sensoren zusammen; die vierte Datenverbindung fasst alle Datenverbindungen zwischen dem Regler und den Bypass-Ventilen des Kompressorsystems zusammen.

Es kann zudem eine Datenverbindung zwischen dem Steuersystem und dem Regler geben. Das Steuersystem und der Regler können aber auch so konfiguriert sein, dass sie unabhängig voneinander Stellungen von Saugventil-Abhebegreifern und/oder Bypass-Ventilen kontrollieren.

Das erfindungsgemässe Kompressorsystem des siebten Aspekts der Erfindung führt zu den gleichen Vorteilen gegenüber dem Stand der Technik wie die Verfahren des ersten und zweiten Aspekts der Erfindung.

In einer bevorzugten Ausführungsform des siebten Aspekts der Erfindung umfasst das Kompressorsystem einen ersten Saugventil-Abhebegreifer an einem ersten Kompressor und einen zweiten Saugventil-Abhebegreifer an einem zweiten Kompressor. In der gleichen bevorzugten Ausführungsform umfasst das Steuersystem ein erstes Kennfeld, wobei das erste Kennfeld die Stellung des ersten Saugventil-Abhebegreifers und nicht die Stellung des zweiten Saugventil-Abhebegreifers als Wert umfasst. Zudem umfasst das Steuersystem ein zweites Kennfeld, wobei das zweite Kennfeld die Stellung des zweiten Saugventil-Abhebegreifers und nicht die Stellung des ersten Saugventil-Abhebegreifers als Wert umfasst.

Diese Ausführungsform schliesst selbstverständlich nicht aus, dass das Kompressorsystem mehr als zwei Kompressoren und mehr als zwei Saugventil-Abhebegreifer; und das Steuersystem mehr als zwei Kennfelder umfasst.

Dies ermöglicht das Kontrollieren von einzelnen Teilsegmenten eines Kompressorsystems mit unterschiedlichen Kennfeldern. Beispielsweise wird in einem Kompressorsystem bestehend aus drei Kompressoren ein erstes Kennfeld für die Steuerung der Saugventil-Abhebegreifer der beiden ersten Kompressoren verwendet; und ein zweites Kennfeld wird für die Steuerung der Saugventil-Abhebegreifer des dritten Kompressors verwendet.

Somit können Zwischendrücke und der Enddruck des Kompressorsystems genau gesteuert werden. Es hat sich gezeigt, dass ein solches mehrstufiges Kompressorsystem, bei dem einzelne Segmente separat mit verschiedenen Kennfeldern gesteuert werden, besonders energieeffizient ist. Dies ist insbesondere für mehrstufige Hubkolbenkompressoren der Fall.

Ein achter Aspekt der Erfindung betrifft ein Computerprogramm umfassend Befehle, die bewirken, dass das Kontrollsystem des sechsten Aspekts der Erfindung, insbesondere als Teil des Kompressorsystems des siebten Aspekts der Erfindung, die Verfahrensschritte nach dem ersten Aspekt der Erfindung ausführt.

Ein neunter Aspekt der Erfindung betrifft ein Verfahren zum Komprimieren eines gasförmigen Energieträgers, vorzugsweise ausgewählt aus der Gruppe bestehend aus Wasserstoff, Methan, Ethan, Propan, Butan, Erdgas und Biogas, in einem Kompressorsystem. Das Verfahren umfasst die Schritte:
- Einleiten des gasförmigen Energieträgers ins Kompressorsystem; und
- Steuern des Kompressorsystems mit einem Verfahren gemäss dem zweiten Aspekt der Erfindung.

Gasförmige Energieträger sind Gase, die als Energiequelle dienen können. Sie sind in der Lage, Energie zu liefern, wenn sie verbrannt werden oder in einer Brennstoffzelle umgesetzt werden. Gasförmige Energieträger können auch Gasgemische sein, die mindestens eine Komponente enthalten, die als Energiequelle dient.

Erdgas setzt sich aus mehreren Kohlenwasserstoffverbindungen zusammen. Der Hauptbestandteil ist in der Regel Methan und weitere Bestandteile sind in der Regel Ethan, Propan, Ethen und Butan.

Biogas ist ebenfalls ein Gasgemisch. Es besteht in der Regel hauptsächlich aus Methan. Weitere Komponenten wie Kohlendioxid, Stickstoff, Schwefelwasserstoff und andere Gase können ebenfalls enthalten sein.

Die Erfindung wird nachfolgend anhand konkreter Ausführungsbeispiele beschrieben. Diese Ausführungsformen sollen den Kern der Erfindung in keiner Weise einschränken, sondern dienen vielmehr dazu, das Verständnis der Erfindung zu erleichtern.
- Fig. 1A-C:: Flussdiagramme zeigend einen erfindungsgemässen Verfahrensablauf;
- Fig. 2:: schematische Darstellung des Kompressorsystems (KS) des ersten Ausführungsbeispiels;
- Fig. 3A-C:: Kennfelder der Leistung (P; Fig. 3A), des Durchflusses (D; Fig. 3B) und der Ausgangstemperatur des zweiten Kompressors (TA2; Fig. 3C) als Funktion der Eingangstemperatur des ersten Kompressors (TE1) und der Stellungen der Saugventil-Abhebegreifer (SVA) des ersten Kompressors (K1) und des zweiten Kompressors (K2);
- Fig. 4A-B:: Kennfelder des Durchflusses (D; Fig. 4A) und der Leistung (P; Fig. 4B) als Funktion des Ausgangsdrucks des zweiten Kompressors (pA2) und der Stellungen des Saugventil-Abhebegreifers (SVA) des dritten Kompressors (K3);
- Fig. 5:: schematische Darstellung des Kompressorsystems (KS) des zweiten Ausführungsbeispiels;
- Fig. 6:: schematische Darstellung des Kompressorsystems (KS) des dritten Ausführungsbeispiels.

### Beispiel 1

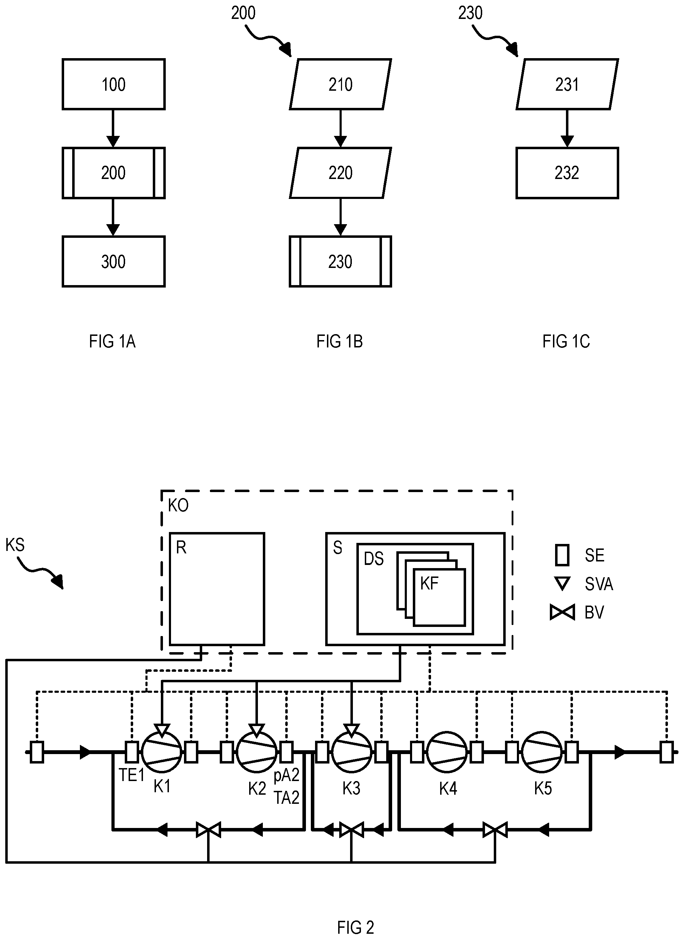

Fig. 1A, 1B und 1C zeigen Flussdiagramme eines erfindungsgemässen Verfahrensablaufs. In Schritt 100 des Verfahrens zur Steuerung des Kompressorsystems (KS) wird wenigstens ein Ist-Wert ermittelt (Fig. 1A). Das Kompressorsystem (KS) in diesem Ausführungsbeispiel beschreibt einen fünfstufigen Hubkolbenkompressor, wobei jede der fünf Kompressorstufen einem Kompressor (K) in der Beschreibung entspricht (Fig. 2). Die zu ermittelnden Ist-Werte umfassen die Ist-Eingangstemperatur des ersten Kompressors (TE1) und der Ist-Ausgangsdruck des zweiten Kompressors (pA2).

Im vorliegenden Ausführungsbeispiel umfasst das Kompressorsystem (KS) nebst den fünf Kompressoren (K) Sensoren (SE), Saugventil-Abhebegreifer (SVA), Bypass-Ventile (BV) sowie ein Steuersystem (S) als Teil eines Kontrollsystems (KO). Die Sensoren (SE) umfassen Drucksensoren und Temperatursensoren; Sensoren (SE) sind am Ein- und Ausgang der einzelnen Kompressoren (K) sowie am Ein- und Ausgang des Kompressorsystems (KS) angebracht. Ein Saugventil-Abhebegreifer (SVA) wird dazu verwendet, das Saugventil eines Kompressors offen zu halten, damit ein Teil des komprimierten Gases aus dem Verdichtungsraum durch den Eingang entweicht. Es gibt eine Bypass-Leitung, die den Ausgang des zweiten Kompressors (K2) mit dem Eingang des ersten Kompressors (K1) verbindet, eine Bypass-Leitung, die den Ausgang mit dem Eingang des dritten Kompressors (K3) verbindet, und eine Bypass-Leitung, die den Ausgang des fünften Kompressors (K5) mit dem Eingang des vierten Kompressors (K4) verbindet. Alle Bypass-Leitungen sind mit einem Bypass-Ventil (BV) ausgestattet. Die Bypass-Ventile (BV) des vorliegenden Ausführungsbeispiels werden nicht mittels Kennfelder (KF) eingestellt, sondern werden über einen PID-Regler (R) als Teil des Kontrollsystems (KO) geregelt zur Feinsteuerung des Kompressorsystems (KS) Das Steuersystem (S) umfasst einen internen Datenspeicher (DS), worauf die für das Verfahren benötigten Kennfelder (KF) gespeichert sind. Die Kennfelder (KF) im vorliegenden Beispiel sind als mathematische Formeln gespeichert, welche durch eine Regressionsanalyse von Daten bestimmt wurden. Das Steuersystem (S) und der Regler (R) sind mit den Sensoren (SE) verbunden, um die gemessenen Sensordaten zu übertragen (gestrichelte Linien). Das Steuersystem (S) ist ausserdem mit den Saugventil-Abhebegreifern (SVA) und der Regler (R) mit den Bypass-Ventilen (BV) verbunden, um die Stellungen zu ermitteln und einzustellen (durchgezogene Linien). Die gefüllten Dreiecke geben die Flussrichtung des zu komprimierenden Gases an (Fig. 2).

In Schritt 200 des Verfahrens werden im vorliegenden Ausführungsbeispiel die Soll-Stellungen der Saugventil-Abhebegreifer (SVA) des ersten Kompressors (K1), des zweiten Kompressors (K2) und des dritten Kompressors (K3) ermittelt (Fig. 1A).

In Teilschritt 210 des übergeordneten Schritts 200 werden die in Schritt 100 ermittelten Ist-Werte umfassend die Ist-Eingangstemperatur des ersten Kompressors (TE1) und der Ist-Ausgangsdruck des zweiten Kompressors (pA2) empfangen (Fig. 1B).

Als nächstes werden in Teilschritt 220 des übergeordneten Schritts 200 Soll-Werte empfangen umfassend der Soll-Durchfluss (D) des zu komprimierenden Gases und die maximale Soll-Ausgangstemperatur des zweiten Kompressors (TA2_{MAX}) von 180 °C (Fig. 1B).

Ausgehend von den Ist- und Soll-Werten werden in Teilschritt 230 des übergeordneten Schritts 200 die Soll-Stellungen der Saugventil-Abhebegreifer (SVA) des ersten Kompressors (K1), des zweiten Kompressors (K2) und des dritten Kompressors (K3) bestimmt (Fig. 1B) .

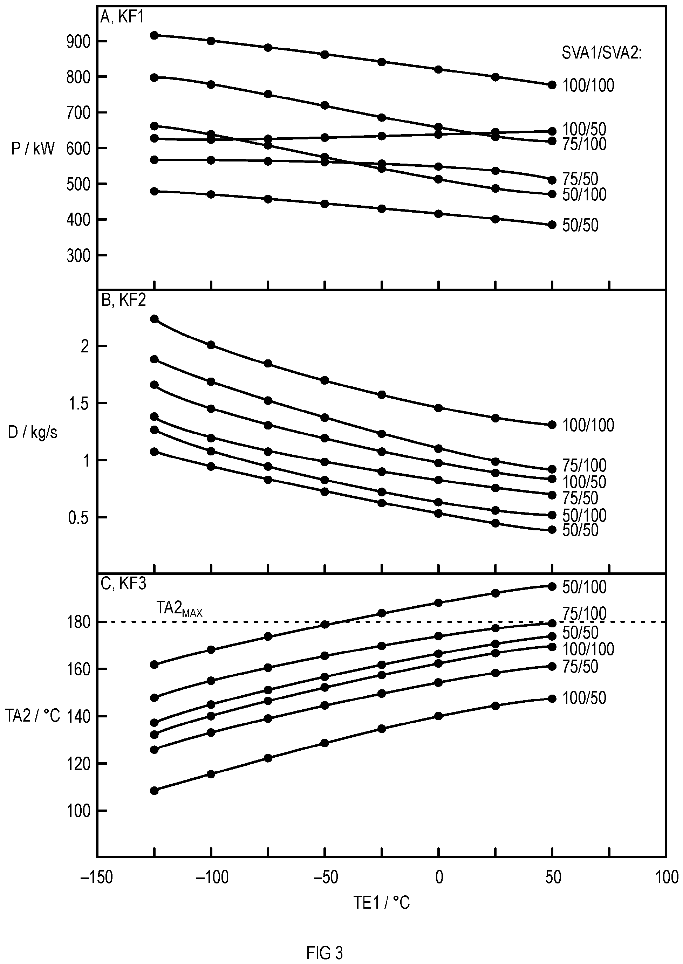

Schritt 230 ist aus zwei Teilschritten zusammengesetzt (Fig. 1C) :
In Teilschritt 231 werden im vorliegenden Ausführungsbeispiel des erfindungsgemässen Verfahrens fünf Kennfelder (KF) empfangen (Fig. 1C). Die ersten drei Kennfelder (KF1, KF2 und KF3) bestehen aus je einem bestimmten Wert als Funktion der Eingangstemperatur des ersten Kompressors (TE1) und der Stellungen der Saugventil-Abhebegreifer (SVA1; SVA2) des ersten Kompressors (K1) und des zweiten Kompressors (K2) (Fig. 3A-C). Die Leistung (P) des Kompressorsystems (KS) ist der bestimmte Wert im ersten Kennfeld (KF1; Fig. 3A), der Durchfluss (D) in kg/s ist der bestimmte Wert im zweiten Kennfeld (KF2; Fig. 3B) und die Ausgangstemperatur des zweiten Kompressors (TA2) ist der bestimmte Wert im dritten Kennfeld (KF3; Fig. 3C). Die Kennfelder (KF) sind als Lookup-Tabellen im internen Datenspeicher (DS) des Steuersystems (S) im Kompressorsystem (KS) gespeichert. Die Kennlinien-Bezeichnungen SVA1/SVA2 geben die Stellungen der Saugventil-Abhebegreifer (SVA) des entsprechenden Kompressors (K) an. Die Kennlinien-Bezeichnung 75/100 in Fig. 3 bedeutet beispielsweise, dass der wenigstens eine Saugventil-Abhebegreifer (SVA1) der ersten Kompressorstufe (K1) so eingestellt ist, dass 75 % des maximal möglichen Durchflusses (D) dieser Kompressorstufe (K1) ermöglicht werden. Der wenigstens eine Saugventil-Abhebegreifer (SVA2) der zweiten Kompressorstufe (K2) ermöglicht in diesem Fall 100 % des maximal möglichen Durchflusses (D) dieser Kompressorstufe (K2) .

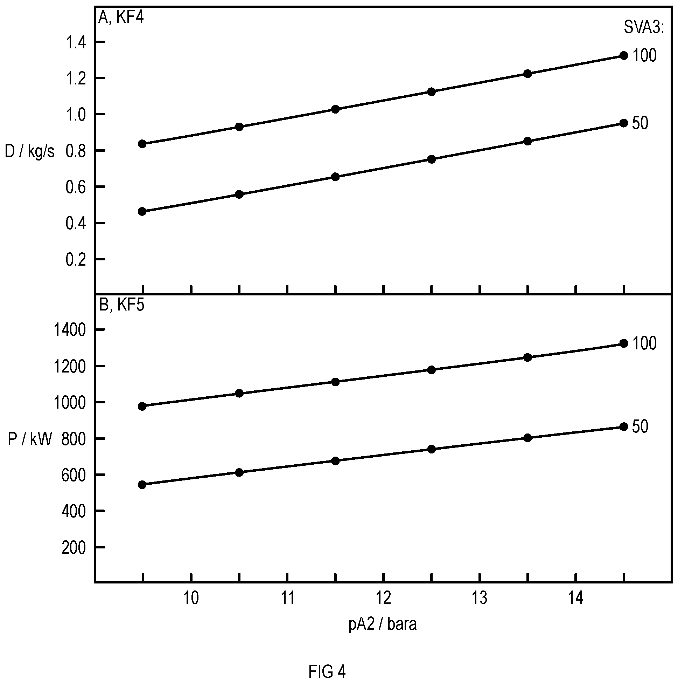

Die übrigen zwei Kennfelder (KF4 und KF5) bestehen aus je einem bestimmten Wert als Funktion des Ausgangsdrucks des zweiten Kompressors (pA2, in bar absolut) und der Stellungen des Saugventil-Abhebegreifers (SVA3) des dritten Kompressors (K3) (Fig. 4AB). Der Durchfluss (D) in kg/s ist der bestimmte Wert im vierten Kennfeld (KF4; Fig. 4A) und die Leistung (P) des Kompressorsystems (KS) ist der bestimmte Wert im fünften Kennfeld (KF5; Fig. 4B) .

Nach Teilschritt 231, dem Empfangen der fünf Kennfelder (KF), werden in Teilschritt 232 die Soll-Stellungen der Saugventil-Abhebegreifer (SVA) der Kompressoren 1, 2 und 3 (K1, K2 und K3) bestimmt (Fig. 1C). Anhand der in den Kennfeldern (K) enthaltenden Daten werden die Soll-Stellungen mittels Sortier-Algorithmus bestimmt, welche das Einhalten bestimmter Bedingungen ermöglichen. Im vorliegenden Ausführungsbeispiel ist die erste Bedingung, dass der Soll-Durchfluss im Wesentlichen ermöglicht wird. Als zweite Bedingung sollten Soll-Stellungen bestimmt werden, welche zu einer möglichst niedrigen Kompressorsystemleistung führen. Ausserdem muss die Soll-Ausgangstemperatur des zweiten Kompressors 180 °C nicht überschreiten.

Schliesslich werden in Schritt 300 die in Schritt 200 ermittelten Soll-Stellungen der Saugventil-Abhebegreifer (SVA) eingestellt (Fig. 1A).

Die erfindungsgemässen Ist-Werte (z.B. die Ist-Eingangstemperatur eines Kompressors) und Soll-Werte (z.B. der Soll-Durchfluss als Durchflussbedarf einer Kraftstoff-Regelanlage) werden bei bestimmungsgemässem Gebrauch überwacht und der Prozess des Bestimmens der Stellungen der Saugventil-Abhebegreifer und/oder Bypass-Ventile entsprechend häufig wiederholt, um die zum jeweiligen Zeitpunkt optimalen Stellungen zu bestimmen und einzustellen. Typischerweise wird bei einem konstantem Soll-Durchfluss die Stellung eines Saugventil-Abhebegreifers 1-5 Mal pro Stunde neu eingestellt. Diese Kennfeld-basierte Steuerung ermöglicht einen besonders effizienten Betrieb, ohne dass beispielsweise der Ist-Durchfluss oder die Ist-Leistung gemessen und im Steuersystem empfangen werden.

Vergleichbare Kontrollsysteme ermöglichen das Einstellen von deutlich weniger Stellungs-Kombinationen und somit eine weniger genaue Kontrolle über die einzuhaltenden Betriebs-Bedingungen wie der Soll-Durchfluss oder allfällige Höchsttemperaturen bestimmter Komponenten. Es hat sich vergleichsweise gezeigt, dass ein Controller, der ein Kompressorsystem gemäss diesem Ausführungsbeispiel steuert, zu deutlich weniger Gasrückfluss über die Bypass-Leitungen führt. Das bedeutet, dass weniger Energie verloren geht durch das Rückführen bereits komprimierten Gases und somit eine höhere Energieeffizienz erreicht werden kann.

### Beispiel 2

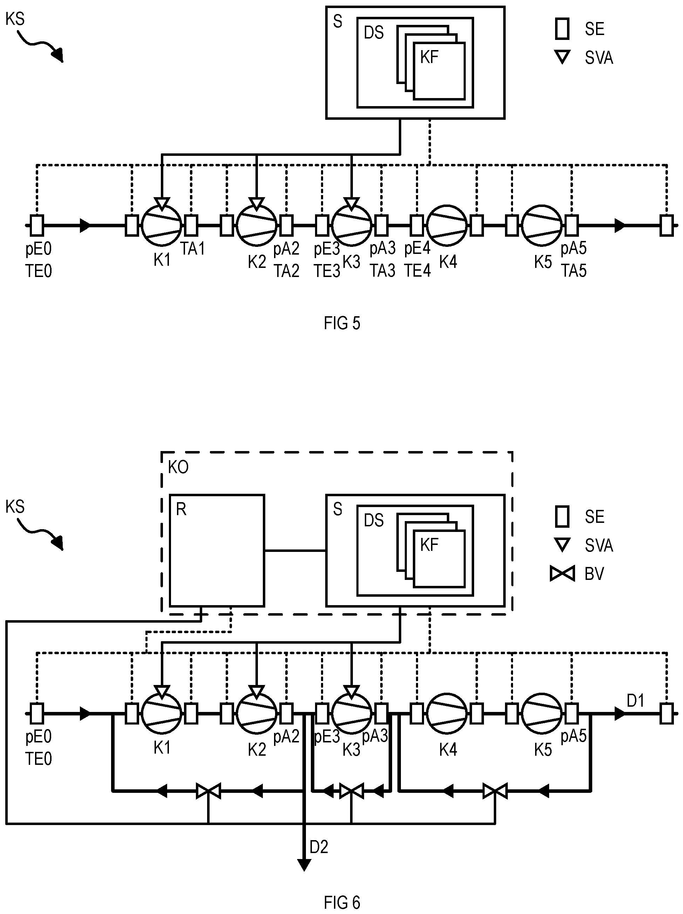

In einem zweiten Ausführungsbeispiel ist das Kompressorsystem (KS) wieder ein fünfstufiger Hubkolbenkompressor, wobei eine Kompressorstufe als Kompressor (K) dargestellt wird (Fig. 5). Die ersten drei Kompressoren (K1-K3) sind mit Saugventil-Abhebegreifern (SVA) ausgestattet. Bypass-Leitungen gibt es in diesem Beispiel keine.

Im Vergleich zum vorangehenden Ausführungsbeispiel wird in diesem Ausführungsbeispiel auch der Eingangsdruck (pE) des Kompressorsystems (KS) und einzelner Kompressoren (K) bei der kennfeldbasierten Steuerung als Wert in Betracht gezogen. Ausserdem ist die Gaszusammensetzung des zu komprimierenden Gases Teil der verwendeten Kennfelder (KF). Die Gaszusammensetzung wird in Form von Mengenanteilen der einzelnen Komponenten des Gases angegeben.

Zur Steuerung der ersten beiden Kompressoren (K1 und K2) im Kompressorsystem (KS) werden die folgenden Kennfelder angelegt:
- D = f(TE0, pE0, pA2, gas, SVA1, SVA2);
- P = f(TE0, pE0, pA2, gas, SVA1, SVA2);
- TA1 = f(TE0, pE0, pA2, gas, SVA1, SVA2); und
- TA2 = f(TE0, pE0, pA2, gas, SVA1, SVA2).

Der Wert TE0 ist dabei die Eingangstemperatur des Kompressorsystems und der Wert pE0 ist der Eingangsdruck des Kompressorsystems. Die Gaszusammensetzung wird als «gas» angegeben.

Der mindestens eine Saugventil-Abhebegreifer des ersten Kompressors (SVA1) kann in diesem Ausführungsbeispiel jeweils einen Durchfluss durch den Verdichtungsraum von 50 % oder 100 % ermöglichen. Beim zweiten Kompressor (K2), also bei der zweiten Kompressorstufe, können drei diskrete Durchflüsse durch den Verdichtungsraum ermöglicht werden: 50 %, 75 % und 100 %.

Beim dritten Kompressor (K3) sind ebenfalls zwei diskrete Einstellungen möglich: 50 % und 100 % des maximal möglichen Durchflusses durch den Verdichtungsraum. Der dritte Kompressor (K3) wird durch folgende Kennfelder gesteuert:
- D = f(TE3, pE3, pA3, gas, SVA3);
- P = f(TE3, pE3, pA3, gas, SVA3); und
- TA3 = f(TE3, pE3, pA3, gas, SVA3).

Wie der erste und zweite Kompressor (K1 und K2) werden der vierte und fünfte Kompressor (K4 und K5) gemeinsam gesteuert. Folgende Kennfelder modellieren diese beiden Kompressoren (oder Kompressorstufen):
- D = f(TE4, pE4, pA5, gas);
- P = f(TE4, pE4, pA5, gas); and
- TA5 = f(TE4, pE4, pA5, gas).

Damit wird unter Berücksichtigung des Soll-Durchflusses der benötigte Eingangsdruck für den vierten Kompressor bestimmt (pE4). Da pE4 ungefähr pA3 entspricht, kann so der dritte Kompressor (K3) und somit die Einstellungen der ersten beiden Kompressoren (K1 und K2) mit den weiter oben beschriebenen Kennfeldern optimiert werden.

### Beispiel 3

Im dritten Ausführungsbeispiel ist die Konfiguration des Kompressorsystems (KS) zum grössten Teil gleich wie beim ersten Ausführungsbeispiel. Ein Unterschied ist, dass sich der Durchfluss (D) aus einem ersten und einem zweiten Teildurchfluss (D1 und D2) zusammensetzt (Fig. 6). Ein Teil des komprimierten Gases kann dabei zwischen dem zweiten und dem dritten Kompressor (K) entnommen werden, wobei der Druck dem Ausgangsdruck des zweiten Kompressors (pA2) entspricht. Der Rest des Gases fliesst hinter dem fünften Kompressor (K5) aus dem Kompressorsystem (KS).

Das Kompressorsystem (KS) wird mittels kennfeldbasiertem Steuersystem (S) für einen energieeffizienten Betrieb eingestellt. Dabei werden die Eingangstemperatur und der Eingangsdruck des Kompressorsystems (TE0 und pE0), der Ausgangsdruck des fünften Kompressors (pA5), sowie der Soll-Durchfluss (D) aufgeteilt in die beiden Teildurchflüsse (D1 und D2) vorgegeben. Damit werden die Stellungen der Saugventil-Abhebegreifer (SVA) der ersten drei Kompressoren (K1 bis K3), sowie der benötigte Ausgangsdruck des zweiten und des dritten Kompressors (K2 und K3) mittels Kennfeldern (KF) bestimmt.

Die bestimmten Werte des Ausgangsdrucks des zweiten und des dritten Kompressors (K2 und K3) wird vom Steuersystem (S) auf den Regler (R), welcher auch in diesem Fall ein PID-Regler ist, übertragen. Der Regler (R) ermöglicht das schnelle Einstellen der benötigten Zwischendrücke durch Einstellen der Bypass-Ventile (BV) .

## Patentansprüche

1. Computerimplementiertes Verfahren zur Ermittlung wenigstens einer Soll-Stellung mindestens eines Saugventil-Abhebegreifers (SVA) und/oder mindestens eines Bypass-Ventils (BV) eines Kompressorsystems (KS) zum Komprimieren eines Gases umfassend mindestens einen Kompressor (K), umfassend die Schritte:
I. Empfangen (210) wenigstens eines Ist-Wertes, wobei der wenigstens eine Ist-Wert vorzugsweise
- eine Ist-Eingangstemperatur (TE) des Kompressorsystems (KS) und/oder des mindestens einen Kompressors (K) ist,
- ein Ist-Ausgangsdruck (pA) des Kompressorsystems (KS) und/oder des mindestens einen Kompressors (K) ist,
- ein Ist-Eingangsdruck (pE) des Kompressorsystems (KS) und/oder des mindestens einen Kompressors (K) ist,
- die Gaszusammensetzung des zu komprimierenden Gases ist, oder
- eine Kombination davon ist;
II. Empfangen (220) wenigstens eines Soll-Wertes, wobei der wenigstens eine Soll-Wert vorzugsweise
- ein Soll-Durchfluss (D) ist,
- eine maximale Soll-Ausgangstemperatur (TA) des Kompressorsystems (KS) und/oder des mindestens einen Kompressors (K) ist,
- ein Soll-Ausgangsdruck (pA) des Kompressorsystems (KS) und/oder des mindestens einen Kompressors (K) ist, oder
- eine Kombination davon ist;
III. Bestimmen (230) wenigstens einer Soll-Stellung des mindestens einen Saugventil-Abhebegreifers (SVA) und/oder mindestens einen Bypass-Ventils (BV) gemäss den Schritten
i. Empfangen (231) wenigstens eines Kennfelds (KF);
ii. Bestimmen (232) der wenigstens einen Soll-Stellung des mindestens einen Saugventil-Abhebegreifers (SVA) und/oder des mindestens einen Bypass-Ventils (BV) basierend auf dem wenigstens einen Kennfeld (KF), dem wenigstens einen Ist-Wert und dem wenigstens einen Soll-Wert unter Einhalten der Bedingung,
- dass der Soll-Durchfluss (D) im Wesentlichen ermöglicht wird,
- dass die Leistung (P) des Kompressorsystems (KS) und/oder des mindestens einen Kompressors (K) möglichst niedrig ist,
- dass der Wirkungsgrad des Kompressorsystems (KS) und/oder des mindestens einen Kompressors (K) möglichst hoch ist,
- dass der spezifische Energieverbrauch des Kompressorsystems (KS) und/oder des mindestens einen Kompressors (K) möglichst niedrig ist,
- dass die maximale Soll-Ausgangstemperatur (TA) des Kompressorsystems (KS) und/oder des mindestens einen Kompressors (K) nicht überschritten wird,
- dass der Soll-Ausgangsdruck (pA) des Kompressorsystems (KS) und/oder des mindestens einen Kompressors (K) im Wesentlichen ermöglicht wird, oder
- dass eine Kombination davon erfüllt wird.

2. Verfahren nach Anspruch 1, wobei das wenigstens eine Kennfeld (KF) in Schritt III.i. (231) einen ersten Wert umfasst, ausgewählt aus der Gruppe bestehend aus
- Leistung (P) des Kompressorsystems (KS) und/oder des mindestens einen Kompressors (K),
- Wirkungsgrad des Kompressorsystems (KS) und/oder des mindestens einen Kompressors (K),
- spezifischer Energieverbrauch des Kompressorsystems (KS) und/oder des mindestens einen Kompressors (K),
- Durchfluss (D), und
- Ausgangstemperatur (TA) des Kompressorsystems (KS) und/oder des mindestens einen Kompressors (K),
als Funktion von wenigstens zwei anderen Werten, ausgewählt aus der Gruppe bestehend aus
- Eingangstemperatur (TE) des Kompressorsystems (KS) und/oder des mindestens einen Kompressors (K),
- Ausgangsdruck (pA) des Kompressorsystems (KS) und/oder des mindestens einen Kompressors (K),
- Eingangsdruck (pE) des Kompressorsystems (KS) und/oder des mindestens einen Kompressors (K),
- Gaszusammensetzung des zu komprimierenden Gases, und
- Stellung(en) des mindestens einen Saugventil-Abhebegreifers (SVA) und/oder des mindestens einen Bypass-Ventils (BV).

3. Verfahren nach Anspruch 2, wobei einer der wenigstens zwei anderen Werte die Stellung(en) des mindestens einen Saugventil-Abhebegreifers (SVA) und/oder des mindestens einen Bypass-Ventils (BV) ist.

4. Verfahren nach einem der vorangehenden Ansprüche, wobei der mindestens eine Kompressor (K) mindestens ein Hubkolbenkompressor ist und/oder wobei das Kompressorsystem (KS) mindestens zwei Kompressoren (K) umfasst.

5. Verfahren zur Steuerung eines Kompressorsystems (KS) umfassend mindestens einen Kompressor (K) mit einem Steuersystem (S), umfassend die Schritte:
i. Ermitteln (100) wenigstens eines Ist-Wertes, wobei der wenigstens eine Ist-Wert vorzugsweise
- eine Ist-Eingangstemperatur (TE) des Kompressorsystems (KS) und/oder des mindestens einen Kompressors (K) ist,
- ein Ist-Ausgangsdruck (pA) des Kompressorsystems (KS) und/oder des mindestens einen Kompressor (K) ist,
- ein Ist-Eingangsdruck (pE) des Kompressorsystems (KS) und/oder des mindestens einen Kompressors (K) ist, oder
- eine Kombination davon ist;
ii. Ermitteln (200) im Steuersystem (S) wenigstens einer Soll-Stellung mindestens eines Saugventil-Abhebegreifers (SVA) und/oder mindestens eines Bypass-Ventils (BV) gemäss dem Verfahren von einem der vorangehenden Ansprüche; und
iii. Einstellen (300) der in Schritt ii. ermittelten wenigstens einen Soll-Stellung des mindestens einen Saugventil-Abhebegreifers (SVA) und/oder mindestens einen Bypass-Ventils (BV) .

6. Verfahren nach einem der vorangehenden Ansprüche, wobei in Schritt III.i (231).
i. ein erstes Kennfeld (KF) empfangen wird umfassend die Leistung (P) des Kompressorsystems als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
ii. ein zweites Kennfeld (KF) empfangen wird umfassend der Durchfluss (D) als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
iii. ein drittes Kennfeld (KF) empfangen wird umfassend die Ausgangstemperatur (TA) des Kompressorsystems (KS) und/oder des mindestens einen Kompressors (K) als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
iv. ein viertes Kennfeld (KF) empfangen wird umfassend der Durchfluss (D) als Funktion
- des Ausgangsdrucks (pA) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
v. ein fünftes Kennfeld (KF) empfangen wird umfassend die Leistung (P) des Kompressorsystems als Funktion
- des Ausgangsdrucks (pA) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV); oder
vi. eine Kombination dieser Kennfelder (KF) empfangen wird.

7. Verfahren nach einem der vorangehenden Ansprüche, wobei
- die wenigstens eine Soll-Ventilstellung des mindestens einen Bypass-Ventils (BV) mit einem Regler (R), vorzugsweise mit einem PID-Regler, bestimmt wird;
- ; und/oder
- die Drehzahl des mindestens einen Kompressors (K) im Wesentlichen unverändert bleibt.

8. Computerimplementiertes Verfahren zur Erzeugung wenigstens eines Kennfelds (KF) mittels (i) Simulation eines Kompressorsystems (KS) und/oder (ii) experimenteller Datenermittlung zur Verwendung des wenigstens einen Kennfelds (KF) in einem Verfahren nach einem der vorangehenden Ansprüche.

9. Kennfeld (KF) zur Verwendung in einem Verfahren gemäss einem der Ansprüche 1 bis 7, wobei das Kennfeld (KF) einen ersten Wert umfasst, ausgewählt aus der Gruppe bestehend aus
- Leistung (P) des Kompressorsystems (KS) und/oder des mindestens einen Kompressors (K),
- Wirkungsgrad des Kompressorsystems (KS) und/oder des mindestens einen Kompressors (K),
- spezifischer Energieverbrauch des Kompressorsystems (KS) und/oder des mindestens einen Kompressors (K),
- Durchfluss (D), und
- Ausgangstemperatur (TA) des Kompressorsystems (KS) und/oder des mindestens einen Kompressors (K),
als Funktion von
- Stellung(en) mindestens eines Saugventil-Abhebegreifers (SVA) und/oder des mindestens eines Bypass-Ventils (BV), und
- wenigstens eines anderen Wertes, ausgewählt aus der Gruppe bestehend aus
- Eingangstemperatur (TE) des Kompressorsystems (KS) und/oder des mindestens einen Kompressors (K),
- Ausgangsdruck (pA) des Kompressorsystems (KS) und/oder des mindestens einen Kompressors (K),
- Eingangsdruck (pE) des Kompressorsystems (KS) und/oder des mindestens einen Kompressors (K), und
- Gaszusammensetzung des zu komprimierenden Gases.

10. Kennfeld (KF) nach Anspruch 9, wobei das Kennfeld (KF)
- die Leistung (P) des Kompressorsystems (KS) umfasst als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
- den Durchfluss (D) umfasst als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
- die Ausgangstemperatur (TA) des Kompressorsystems (KS) und/oder des mindestens einen Kompressors (K) umfasst als Funktion
- der Eingangstemperatur (TE) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV);
- den Durchfluss (D) umfasst als Funktion
- des Ausgangsdrucks (pA) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV); oder
- die Leistung (P) des Kompressorsystems umfasst als Funktion
- des Ausgangsdrucks (pA) des Kompressorsystems (KS) und/oder des mindestens einen Kompressors (K), und
- der Stellung(en) des mindestens einen Saugventil-Abhebegreifers (SVA) und/oder des mindestens einen Bypass-Ventils (BV) .

11. Kontrollsystem (KO) umfassend
- ein Steuersystem (S) umfassend einen internen Datenspeicher (DS), wobei auf dem internen Datenspeicher (DS) wenigstens ein Kennfeld (KF) gespeichert ist;
- optional, einen Regler (R), vorzugsweise einen PID-Regler; und
III. Mittel, die so angepasst sind, dass sie die Verfahrensschritte nach einem der Ansprüche 1 bis 4 ausführen.

12. Kompressorsystem (KS) umfassend
- mindestens einen Kompressor (K), vorzugsweise mindestens einen Hubkolbenkompressor;
- wenigstens einen Sensor (SE) zum Ermitteln wenigstens eines Ist-Wertes, wobei der wenigstens eine Sensor ein Temperatursensor oder ein Drucksensor ist,
- mindestens einen Saugventil-Abhebegreifer (SVA) im mindestens einen Kompressor (K) und/oder mindestens ein Bypass-Ventil (BV);
- ein Kontrollsystem (KO), umfassend
- ein Steuersystem (S), umfassend einen internen Datenspeicher (DS), umfassend wenigstens ein Kennfeld (KF), wobei
- eine erste Datenverbindung das Empfangen des wenigstens einen Ist-Wertes im Steuersystem (S) ermöglicht; und
- eine zweite Datenverbindung das Steuern des mindestens einen Saugventil-Abhebegreifers (SVA) und/oder des mindestens einen Bypass-Ventils (BV) ermöglicht;
- optional, einen Regler (R), vorzugsweise einen PID-Regler, wobei
- eine dritte Datenverbindung das Empfangen des wenigstens einen Ist-Wertes im Regler (R), vorzugsweise im PID-Regler ermöglicht; und
- eine vierte Datenverbindung das Regeln des mindestens einen Bypass-Ventils (BV) ermöglicht;
**dadurch gekennzeichnet, dass** das Kontrollsystem (KO) Mittel umfasst, die so angepasst sind, dass sie die Verfahrensschritte nach einem der Ansprüche 1 bis 4 ausführen.

13. Kompressorsystem (KS) nach Anspruch 12, wobei
- das Kompressorsystem (KS) einen ersten Saugventil-Abhebegreifer (SVA) an einem ersten Kompressor (K) und einen zweiten Saugventil-Abhebegreifer (SVA) an einem zweiten Kompressor (K) umfasst;
- das Steuersystem (S) ein erstes Kennfeld (KF) umfasst, wobei das erste Kennfeld (KF) die Stellung des ersten Saugventil-Abhebegreifers (SVA) und nicht die Stellung des zweiten Saugventil-Abhebegreifers (SVA) als Wert umfasst; und
- das Steuersystem (S) ein zweites Kennfeld (KF) umfasst, wobei das zweite Kennfeld (KF) die Stellung des zweiten Saugventil-Abhebegreifers (SVA) und nicht die Stellung des ersten Saugventil-Abhebegreifers (SVA) als Wert umfasst.

14. Computerprogramm umfassend Befehle, die bewirken, dass das Kontrollsystem (KO) des Anspruchs 11, insbesondere als Teil des Kompressorsystems (KS) gemäss einem der Ansprüche 12 bis 13, die Verfahrensschritte nach einem der Ansprüche 1 bis 4 ausführt.

15. Verfahren zum Komprimieren eines gasförmigen Energieträgers, vorzugsweise ausgewählt aus der Gruppe bestehend aus Wasserstoff, Methan, Ethan, Propan, Butan, Erdgas und Biogas, in einem Kompressorsystem (KS), das Verfahren umfassend die Schritte:
- Einleiten des gasförmigen Energieträgers ins Kompressorsystem (KS); und
- Steuern des Kompressorsystems (KS) mit einem Verfahren gemäss einem der Ansprüche 5 bis 7.
